# EUROPEAN PATENT APPLICATION

(11) **EP 4 808 094 A1**
(43) Date of publication of application: **16.09.2026**
(21) Application number: 24896238.3
(22) Date of filing: 08.11.2024
(51) Int. Cl.: H04L 69/18

(54) **ACCESS NETWORK DEVICE AND COMMUNICATION METHOD**

(30) Priority: 27.11.2023 CN 202311598660
(71) Applicant: Huawei Technologies Co., Ltd., Shenzhen, Guangdong 518129 (CN)
(72) Inventor: SHUAI, Yanglai, Shenzhen, Guangdong 518129 (CN); CHU, Zhiyuan, Shenzhen, Guangdong 518129 (CN); CUI, Shanchao, Shenzhen, Guangdong 518129 (CN)
(74) Representative: Thun, Clemens
(86) International application number: PCT/CN2024/131074
(87) International publication number: WO 2025/113147

(57) **Abstract**

An access network device and a communication method, relating to the field of communication technologies, are provided, to reduce traffic on a fronthaul interface and improve communication performance. The access network device includes a first network element and a second network element communicatively connected to the first network element. The first network element includes a radio resource control function, a packet data convergence protocol function, a non-real-time part of a radio link control function, and a non-real-time part of a medium access control function; and the second network element includes a non-real-time part of a physical layer function and a real-time part of the physical layer function.

## Description

This application claims priority to Chinese Patent Application No. 202311598660.X, filed with the China National Intellectual Property Administration on November 27, 2023 and entitled "ACCESS NETWORK DEVICE AND COMMUNICATION METHOD", which is incorporated herein by reference in its entirety.

### TECHNICAL FIELD

This application relates to the field of communication technologies, and in particular, to an access network device and a communication method.

### BACKGROUND

In a communication system, an access network device may include a central unit (central unit, CU), a distributed unit (distributed unit, DU), and a radio unit (radio unit, RU). The DU and the RU may communicate with each other through a fronthaul (fronthaul, FH) interface.

With the continuous development of communication technologies, frequency bands for communication between the access network device and a terminal device are increasingly shifting toward higher frequencies, and higher frequency bands cause a bandwidth increase, which in turn results in a sharp increase in traffic on the fronthaul interface.

Therefore, how to reduce the traffic on the fronthaul interface and improve communication performance becomes an urgent problem to be resolved.

### SUMMARY

Embodiments of this application provide an access network device and a communication method, to reduce traffic on a fronthaul interface and improve communication performance.

According to a first aspect, an access network device is provided. The access network device includes a first network element and a second network element communicatively connected to the first network element. The first network element includes a radio resource control (radio resource control, RRC) function, a packet data convergence protocol (packet data convergence protocol, PDCP) function, a non-real-time part of a radio link control (radio link control, RLC) function, and a non-real-time part of a medium access control (medium access control, MAC) function; and the second network element includes a non-real-time part of a physical (physical, PHY) layer function and a real-time part of the PHY layer function.

Based on the first aspect, the access network device may include the first network element and the second network element, and the second network element may include the real-time part and the non-real-time part of the PHY layer function, in other words, the second network element may directly process data transmitted at a PHY layer, without sending the data to the first network element, so that traffic on a fronthaul interface can be reduced, and communication performance can be further improved.

In a possible implementation, the second network element further includes a real-time part of the RLC function and a real-time part of the MAC function.

Based on this possible implementation, the second network element may further include the real-time part of the MAC layer function and the real-time part of the RLC layer function in addition to the PHY layer function, and the second network element may directly process more data, so that traffic on a fronthaul interface can be further reduced, and communication performance can be further improved.

In a possible implementation, the first network element further includes a real-time part of the RLC function.

In a possible implementation, the second network element further includes a real-time part of the MAC function.

In a possible implementation, the first network element further includes a real-time part of the MAC function.

Based on the foregoing three possible implementations, several feasible solutions are provided for the first network element and the second network element to divide functions.

According to a second aspect, a first network element is provided. The first network element includes an RRC function, a PDCP function, a non-real-time part of an RLC function, and a non-real-time part of a MAC function.

Based on the second aspect, the first network element may include the foregoing several functions. The first network element may process data transmitted at an RRC layer and a PDCP layer, and non-real-time data transmitted at an RLC layer and a MAC layer, to provide a feasible solution for the implementation of the first network element.

In a possible implementation, the first network element further includes a real-time part of the RLC function.

In a possible implementation, the first network element further includes a real-time part of the MAC function.

Based on the foregoing two possible implementations, the first network element may further process real-time data transmitted at an RLC layer and/or real-time data transmitted at a MAC layer, to provide two feasible solutions for the implementation of the first network element.

According to a third aspect, a second network element is provided. The second network element includes a non-real-time part of a PHY layer function and a real-time part of the PHY layer function.

Based on the third aspect, the second network element may include the real-time part and the non-real-time part of the PHY layer function, in other words, the second network element may directly process data transmitted at a PHY layer, without sending the data to a first network element, so that traffic on a fronthaul interface can be reduced, and communication performance can be further improved.

In a possible implementation, the second network element further includes a real-time part of a MAC function.

Based on this possible implementation, the second network element may further include the real-time part of the MAC layer function in addition to the PHY layer function, and the second network element may directly process more data, so that traffic on a fronthaul interface can be further reduced, and communication performance can be further improved.

In a possible implementation, the second network element further includes a real-time part of a radio link control function.

Based on this possible implementation, the second network element may include the real-time part of the RLC layer function in addition to the PHY layer function and the real-time part of the MAC layer function, and the second network element may directly process more data, so that traffic on a fronthaul interface can be further reduced, and communication performance can be further improved.

With reference to the first aspect, the second aspect, and the third aspect, in a possible implementation, an interface between the first network element and the second network element is a first interface, and a control plane protocol stack of the first interface is determined according to a stream control transmission protocol (stream control transmission protocol, SCTP).

Based on this possible implementation, the control plane protocol stack of the first interface may be determined according to the SCTP, so that a plurality of control plane data streams can be transmitted through the first interface, thereby improving communication effectiveness and providing a feasible solution for determining the control plane protocol stack of the first interface.

With reference to the first aspect, the second aspect, and the third aspect, in a possible implementation, the interface between the first network element and the second network element is the first interface, and a user plane protocol stack of the first interface is determined according to a general packet radio service tunneling protocol-user plane (general packet radio service tunneling protocol-user plane, GTP-U).

Based on this possible implementation, the user plane protocol stack of the first interface may be determined according to the GTP-U protocol, to provide a feasible solution for determining the user plane protocol stack of the first interface.

With reference to the first aspect, the second aspect, and the third aspect, in a possible implementation, an interface between the first network element and the second network element is a first interface, and a protocol stack of the first interface is determined according to an enhanced common public radio interface (enhanced common public radio interface, eCPRI) protocol.

Based on this possible implementation, the protocol stack of the first interface may be determined according to the eCPRI protocol, to provide a feasible solution for determining the protocol stack of the first interface.

With reference to the first aspect, the second aspect, and the third aspect, in a possible implementation, the access network device further includes a third network element communicatively connected to the first network element and the second network element, the third network element includes the non-real-time part of the PHY layer function and the real-time part of the PHY layer function, and an interface between the second network element and the third network element is a second interface; and a control plane protocol stack of the second interface is determined according to the SCTP.

Based on this possible implementation, the third network element may include the non-real-time part of the PHY layer function and the real-time part of the PHY layer function, in other words, the third network element may directly process data transmitted at a PHY layer, without sending the data to the first network element, so that traffic on a fronthaul interface can be reduced, and communication performance can be improved. The control plane protocol stack of the second interface may be determined according to the SCTP, to provide a feasible solution for determining the control plane protocol stack of the second interface.

With reference to the first aspect, the second aspect, and the third aspect, in a possible implementation, the access network device further includes the third network element communicatively connected to the first network element and the second network element, the third network element includes the non-real-time part of the PHY layer function and the real-time part of the PHY layer function, and the interface between the second network element and the third network element is the second interface; and a user plane protocol stack of the second interface is determined according to the GTP-U protocol.

Based on this possible implementation, the third network element may include the non-real-time part of the PHY layer function and the real-time part of the PHY layer function, in other words, the third network element may directly process data transmitted at a PHY layer, without sending the data to the first network element, so that traffic on a fronthaul interface can be reduced, and communication performance can be improved. The user plane protocol stack of the second interface may be determined according to the GTP-U protocol, to provide a feasible solution for determining the user plane protocol stack of the second interface.

With reference to the first aspect, the second aspect, and the third aspect, in a possible implementation, the third network element further includes the real-time part of the MAC function.

Based on this possible implementation, the third network element may further include the real-time part of the MAC layer function in addition to the PHY layer function, and the third network element may directly process more data, so that traffic on a fronthaul interface can be further reduced, and communication performance can be further improved.

With reference to the first aspect, the second aspect, and the third aspect, in a possible implementation, the third network element further includes the real-time part of the RLC function.

Based on this possible implementation, the third network element may further include the real-time part for implementing the RLC layer function in addition to the PHY layer function and the real-time part of the MAC layer function, and the third network element may directly process more data, so that traffic on a fronthaul interface can be further reduced, and communication performance can be further improved.

With reference to the first aspect, the second aspect, and the third aspect, in a possible implementation, the access network device further includes a radio frequency (radio frequency, RF) network element communicatively connected to the second network element, and an interface between the second network element and the RF network element is a third interface; and the third interface is a peripheral interface, and a protocol stack of the third interface is determined according to the eCPRI protocol.

Based on this possible implementation, the protocol stack of the third interface may be determined according to the eCPRI protocol, to provide a feasible solution for determining the protocol stack of the third interface.

With reference to the first aspect, the second aspect, and the third aspect, in a possible implementation, the first network element is configured to send first request information to the second network element; and the second network element is configured to send response information of the first request information to the first network element. The first request information is used to request to configure the first interface, the first request information includes PHY layer configuration information, and the first interface is the interface between the first network element and the second network element.

Based on this possible implementation, the first network element and the second network element may configure the first interface based on the first request information, to provide a feasible solution for configuring the first interface. The first request information may include the PHY layer configuration information, so that data transmission between the first network element and the second network element at a PHY layer can be implemented.

With reference to the first aspect, the second aspect, and the third aspect, in a possible implementation, the first request information further includes RLC configuration information and MAC configuration information; or the first request information further includes MAC configuration information.

Based on this possible implementation, when the first request information further includes the RLC configuration information and the MAC configuration information, data transmission between the first network element and the second network element at an RLC layer and a MAC layer may be implemented; or when the first request information further includes the MAC configuration information, data transmission between the first network element and the second network element at a MAC layer may be implemented.

With reference to the first aspect, the second aspect, and the third aspect, in a possible implementation, the first network element is configured to send first indication information to the second network element; and the second network element is configured to release, based on the first indication information, a resource occupied by the first interface, and send response information of the first indication information to the first network element. The first indication information indicates to release the resource occupied by the first interface, and the first interface is the interface between the first network element and the second network element.

Based on this possible implementation, when the first network element ends communication with the second network element, the first network element may send the first indication information to the second network element, to indicate the second network element to release the resource occupied by the first interface, so that resource utilization can be improved, and communication effectiveness can be further improved.

With reference to the first aspect, the second aspect, and the third aspect, in a possible implementation, the second network element is configured to send second indication information to the first network element; and the first network element is configured to release, based on the second indication information, a resource occupied by the first interface, where the second indication information indicates to release the resource occupied by the first interface, and the first interface is the interface between the first network element and the second network element.

Based on this possible implementation, when the second network element ends communication with the first network element, the second network element may send the second indication information to the first network element, to indicate the first network element to release the resource occupied by the first interface, so that resource utilization can be improved, and communication effectiveness can be further improved.

With reference to the first aspect, the second aspect, and the third aspect, in a possible implementation, the first network element is configured to transparently transmit a downlink control transmission message to the second network element; or the second network element is configured to transparently transmit an uplink control transmission message to the first network element.

Based on this possible implementation, a feasible solution is provided for the first network element to transparently transmit information to the second network element, or a feasible solution is provided for the second network element to transparently transmit information to the first network element.

With reference to the first aspect, the second aspect, and the third aspect, in a possible implementation, the access network device further includes the third network element communicatively connected to the first network element and the second network element, and the third network element includes the non-real-time part of the PHY layer function and the real-time part of the PHY layer function. The second network element is configured to send second request information to the third network element, where the second interface is the interface between the second network element and the third network element. The third network element is configured to send response information of the second request information to the second network element, where the second request information is used to request to configure the second interface, and the second request information includes the PHY layer configuration information.

Based on this possible implementation, the third network element may include the non-real-time part of the PHY layer function and the real-time part of the PHY layer function, in other words, the third network element may directly process data transmitted at a PHY layer, without sending the data to the first network element, so that traffic on a fronthaul interface can be reduced, and communication performance can be improved. In addition, the second network element and the third network element may configure the second interface based on the second request information, to provide a feasible solution for configuring the second interface. The second request information includes the PHY layer configuration information, so that data transmission between the second network element and the third network element at the PHY layer can be implemented.

With reference to the first aspect, the second aspect, and the third aspect, in a possible implementation, the second request information further includes the RLC configuration information and the MAC configuration information; or the second request information further includes the MAC configuration information.

Based on this possible implementation, when the second request information further includes the RLC configuration information and the MAC configuration information, data transmission between the second network element and the third network element at an RLC layer and a MAC layer may be implemented; or when the second request information further includes the MAC configuration information, data transmission between the second network element and the third network element at a MAC layer may be implemented.

With reference to the first aspect, the second aspect, and the third aspect, in a possible implementation, the access network device further includes the third network element communicatively connected to the first network element and the second network element, and the third network element includes the non-real-time part of the PHY layer function and the real-time part of the PHY layer function. The first network element is configured to receive a measurement report (measurement report, MR) from a terminal device, and send third request information to the third network element based on the MR. The third network element is configured to send response information of the third request information to the first network element. The first network element is configured to send a handover command to the terminal device based on the response information of the third request information, where the third request information is used to request to allocate a resource for the terminal device to access the third network element, and the handover command indicates the terminal device to be handed over from the second network element to the third network element.

Based on this possible implementation, the third network element may include the non-real-time part of the PHY layer function and the real-time part of the PHY layer function, in other words, the third network element may directly process data transmitted at a PHY layer, without sending the data to the first network element, so that traffic on a fronthaul interface can be reduced, and communication performance can be improved. In addition, the first network element may determine the third network element based on the measurement report from the terminal device. Further, the first network element may determine, based on the response information of the third request information from the third network element, the resource for the terminal device to access the third network element, to ensure that the terminal device can access the third network element, thereby improving communication reliability.

With reference to the first aspect, the second aspect, and the third aspect, in a possible implementation, the first network element is further configured to send third indication information to the second network element; and the second network element is configured to release, based on the third indication information, a resource occupied by the terminal device. The third indication information indicates to release the resource occupied by the terminal device.

Based on this possible implementation, the second network element may release, based on the third indication information, the resource occupied by the terminal device, so that resource utilization can be improved, and communication effectiveness can be further improved.

According to a fourth aspect, an embodiment of this application provides a communication system. The communication system includes the access network device according to any one of the first aspect or the possible designs of the first aspect, or the communication system includes the first network element according to any one of the second aspect or the possible designs of the second aspect, or the communication system includes the second network element according to any one of the third aspect or the possible designs of the third aspect, or the communication system includes the first network element according to any one of the second aspect or the possible designs of the second aspect and the second network element according to any one of the third aspect or the possible designs of the third aspect.

According to a fifth aspect, a communication method is provided. The method may be performed by an access network device. Unless otherwise specified, the "access network device" in this application may be the access network device, or may be a component (for example, a processor, a chip, or a chip system) in the access network device, or may be a logical module or software that can implement all or a part of functions of the access network device. The method includes: The access network device receives first information from a terminal device via a second network element of the access network device; sends second information to a first network element of the access network device via the second network element; and sends third information to a core network device via the first network element. The second network element includes a non-real-time part of a PHY layer function and a real-time part of the PHY layer function, the second information is information obtained by the second network element processing the first information, the first network element includes an RRC function, a PDCP function, a non-real-time part of an RLC function, and a non-real-time part of a MAC function, and the third information is information obtained by the first network element processing the second information.

Based on the fifth aspect, the second network element may include the non-real-time part of the PHY layer function and the real-time part of the PHY layer function, in other words, the second network element may directly process data transmitted at a PHY layer, without sending the data to the first network element, so that traffic on a fronthaul interface can be reduced, and communication performance can be further improved. The terminal device may communicate with the core network device via the first network element and the second network element in the access network device.

In a possible implementation, the access network device sends first request information to the second network element via the first network element, and sends response information of the first request information to the first network element via the second network element, where the first request information is used to request to configure a first interface, the first request information includes PHY layer configuration information, and the first interface is an interface between the first network element and the second network element.

Based on this possible implementation, the first network element and the second network element may configure the first interface based on the first request information, to provide a feasible solution for configuring the first interface. The first request information may include the PHY layer configuration information, so that data transmission between the first network element and the second network element at a PHY layer can be implemented.

In a possible implementation, the first request information further includes RLC configuration information and MAC configuration information; or the first request information further includes MAC configuration information.

Based on this possible implementation, when the first request information further includes the RLC configuration information and the MAC configuration information, data transmission between the first network element and the second network element at an RLC layer and a MAC layer may be implemented; or when the first request information further includes the MAC configuration information, data transmission between the first network element and the second network element at a MAC layer may be implemented.

In a possible implementation, the access network device sends first indication information to the second network element via the first network element; and releases, based on the first indication information via the second network element, a resource occupied by the first interface, and sends response information of the first indication information to the first network element. The first indication information indicates to release the resource occupied by the first interface, and the first interface is the interface between the first network element and the second network element.

Based on this possible implementation, when the first network element ends communication with the second network element, the first network element may send the first indication information to the second network element, to indicate the second network element to release the resource occupied by the first interface, so that resource utilization can be improved, and communication effectiveness can be further improved.

In a possible implementation, the access network device sends second indication information to the first network element via the second network element; and releases, based on the second indication information via the first network element, a resource occupied by the first interface. The second indication information indicates to release the resource occupied by the first interface, and the first interface is the interface between the first network element and the second network element.

Based on this possible implementation, when the second network element ends communication with the first network element, the second network element may send the second indication information to the first network element, to indicate the first network element to release the resource occupied by the first interface, so that resource utilization can be improved, and communication effectiveness can be further improved.

In a possible implementation, the access network device transparently transmits a downlink control transmission message to the second network element via the first network element; or transparently transmits an uplink control transmission message to the first network element via the second network element.

Based on this possible implementation, a feasible solution is provided for the first network element to transparently transmit information to the second network element, or a feasible solution is provided for the second network element to transparently transmit information to the first network element.

In a possible implementation, the access network device sends second request information to a third network element of the access network device via the second network element, and sends response information of the second request information to the second network element via the third network element. The third network element includes the non-real-time part of the PHY layer function and the real-time part of the PHY layer function, the second request information is used to request to configure a second interface, the second request information includes the PHY layer configuration information, and the second interface is an interface between the second network element and the third network element.

Based on this possible implementation, the second network element and the third network element may configure the second interface based on the second request information, to provide a feasible solution for configuring the second interface. The second request information includes the PHY layer configuration information, so that data transmission between the second network element and the third network element at a PHY layer can be implemented.

In a possible implementation, the second request information further includes the RLC configuration information and the MAC configuration information; or the second request information further includes the MAC configuration information.

Based on this possible implementation, when the second request information further includes the RLC configuration information and the MAC configuration information, data transmission between the second network element and the third network element at an RLC layer and a MAC layer may be implemented; or when the second request information further includes the MAC configuration information, data transmission between the second network element and the third network element at a MAC layer may be implemented.

In a possible implementation, the access network device receives an MR from the terminal device via the first network element; sends third request information to the third network element of the access network device based on the MR via the first network element; sends response information of the third request information to the first network element via the third network element; and sends a handover command to the terminal device based on the response information of the third request information via the first network element, where the third network element includes the non-real-time part of the PHY layer function and the real-time part of the PHY layer function, the third request information is used to request to allocate a resource for the terminal device to access the second network element, and the handover command indicates the terminal device to be handed over from the second network element to the third network element.

Based on this possible implementation, the first network element may determine the third network element based on the measurement report from the terminal device. Further, the first network element may determine, based on the response information of the third request information from the third network element, the resource for the terminal device to access the third network element, to ensure that the terminal device can access the third network element, thereby improving communication reliability.

In a possible implementation, third indication information is sent to the second network element via the first network element, and a resource occupied by the terminal device is released based on the third indication information via the second network element, where the third indication information indicates to release the resource occupied by the terminal device.

Based on this possible implementation, the second network element may release, based on the third indication information, the resource occupied by the terminal device, so that resource utilization can be improved, and communication effectiveness can be further improved.

According to a sixth aspect, a communication apparatus is provided. For beneficial effects, refer to the descriptions of the fifth aspect. Details are not described herein again. The communication apparatus has a function of implementing behavior in the method example in the fifth aspect. The function may be implemented by hardware, or may be implemented by hardware executing corresponding software. The hardware or the software includes one or more modules corresponding to the foregoing function. In a possible design, the communication apparatus includes a transceiver module and a processing module. The transceiver module is configured to perform all receiving and sending operations performed by the communication apparatus in embodiments, and the processing module is configured to perform all operations other than the receiving and sending operations performed by the communication apparatus in embodiments. These modules may perform corresponding functions in the method example in the fifth aspect. For details, refer to the detailed descriptions in the method example. Details are not described herein again.

According to a seventh aspect, a communication apparatus is provided. The communication apparatus may be the access network device in the foregoing method embodiments or a chip disposed in the access network device, or the communication apparatus may be the first network element in the foregoing method embodiments or a chip disposed in the first network element, or the communication apparatus may be the second network element in the foregoing method embodiments or a chip disposed in the second network element, or the communication apparatus may be the terminal device in the foregoing method embodiments or a chip disposed in the terminal device, or the communication apparatus may be the core network device in the foregoing method embodiments or a chip disposed in the core network device. The communication apparatus includes one or more processors. The one or more processors are configured to run a computer program or instructions. When the one or more processors execute the computer program or the instructions, the communication apparatus is caused to perform the communication method according to any one of the fifth aspect or the possible designs of the fifth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighth aspect, an embodiment of this application provides a communication apparatus. The communication apparatus may be the access network device in the foregoing method embodiments or a chip disposed in the access network device, or the communication apparatus may be the first network element in the foregoing method embodiments or a chip disposed in the first network element, or the communication apparatus may be the second network element in the foregoing method embodiments or a chip disposed in the second network element, or the communication apparatus may be the terminal device in the foregoing method embodiments or a chip disposed in the terminal device, or the communication apparatus may be the core network device in the foregoing method embodiments or a chip disposed in the core network device. The communication apparatus includes an input/output interface and a logic circuit. The input/output interface is configured to input and/or output information. The logic circuit is configured to perform the communication method according to any one of the fifth aspect or the possible designs of the fifth aspect, and process and/or generate information based on the information.

According to a ninth aspect, a computer program product is provided. The computer program product includes computer program code. When the computer program code is run, the method performed by the access network device in the foregoing aspects is performed, or the method performed by the terminal device in the foregoing aspects is performed, or the method performed by the core network device in the foregoing aspects is performed.

According to a tenth aspect, this application provides a computer-readable storage medium. The computer-readable storage medium stores a computer program. When the computer program is run, the method performed by the access network device in the foregoing aspects is implemented, or the method performed by the terminal device in the foregoing aspects is implemented, or the method performed by the core network device in the foregoing aspects is implemented.

According to an eleventh aspect, an embodiment of this application provides a computer program. When the computer program runs on a computer, the communication method according to any one of the fifth aspect or the possible designs of the fifth aspect is performed.

### BRIEF DESCRIPTION OF DRAWINGS

FIG. 1 is a diagram of a communication system according to an embodiment of this application;
FIG. 2 is a diagram of a communication system according to an embodiment of this application;
FIG. 3 is a diagram of an access network device according to an embodiment of this application;
FIG. 4 is a diagram of deployment, an architecture, and a protocol stack of an access network device according to an embodiment of this application;
FIG. 5 is a diagram of an access network device according to an embodiment of this application;
FIG. 6 is a diagram of an access network device according to an embodiment of this application;
FIG. 7 is a diagram of an access network device according to an embodiment of this application;
FIG. 8 is a diagram of an access network device according to an embodiment of this application;
FIG. 9 is a diagram of a control plane protocol stack of a first interface according to an embodiment of this application;
FIG. 10 is a diagram of a user plane protocol stack of a first interface according to an embodiment of this application;
FIG. 11 is a diagram of a user plane protocol stack of a first interface according to an embodiment of this application;
FIG. 12 is a diagram of a protocol stack of a first interface according to an embodiment of this application;
FIG. 13 is a diagram of interaction of a communication method according to an embodiment of this application;
FIG. 14 is a diagram of interaction of a communication method according to an embodiment of this application;
FIG. 15 is a diagram of interaction of a communication method according to an embodiment of this application;
FIG. 16 is a diagram of interaction of a communication method according to an embodiment of this application;
FIG. 17 is a diagram of a control plane protocol stack of a second interface according to an embodiment of this application;
FIG. 18 is a diagram of a user plane protocol stack of a second interface according to an embodiment of this application;
FIG. 19 is a diagram of interaction of a communication method according to an embodiment of this application;
FIG. 20 is a diagram of interaction of a communication method according to an embodiment of this application;
FIG. 21 is a diagram of a structure of a communication apparatus according to an embodiment of this application;
FIG. 22 is a diagram of a structure of a communication apparatus according to an embodiment of this application; and
FIG. 23 is a diagram of a structure of another communication apparatus according to an embodiment of this application.

### DESCRIPTION OF EMBODIMENTS

The following describes implementations of embodiments of this application in detail with reference to accompanying drawings in this specification.

In the descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

In the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, a term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, apparatuses provided in embodiments of this application may also correspondingly implement these features or functions. Details are not described herein.

In this application, unless otherwise specified, mutual reference may be made between same or similar parts of embodiments. In embodiments of this application, unless otherwise specified or there is a logic conflict, terms and/or descriptions in different embodiments are consistent and may be referenced by each other. Technical features in different embodiments may be combined to form a new embodiment based on an internal logical relationship. The following implementations of this application are not intended to limit the protection scope of this application.

An access network device and a communication method that are provided in embodiments of this application may be applied to any communication system. The communication system may be a third generation partnership project (third generation partnership project, 3GPP) communication system, such as a long term evolution (long term evolution, LTE) system, a fifth generation (fifth generation, 5G) mobile communication system, a new radio (new radio, NR) communication system, or a vehicle-to-everything (vehicle-to-everything, V2X) system. Alternatively, the access network device and the communication method may be applied to an LTE and 5G hybrid networking system, a non-terrestrial network (non-terrestrial network, NTN) system, a device-to-device (device-to-device, D2D) communication system, a machine-to-machine (machine-to-machine, M2M) communication system, an internet of things (internet of things, IoT), a near field communication (near field communication, NFC) system, a microwave (uWave) communication system, and another next generation communication system, for example, a future communication system such as a sixth generation (sixth generation, 6G) communication system. The communication system may alternatively be a non-3GPP communication system, such as a wireless local area network (wireless local area network, WLAN) or a wireless communication system. This is not limited.

For example, the communication system may include the wireless communication system (for example, a global system for mobile communications (global system for mobile communications, GSM) or a universal mobile telecommunications system (universal mobile telecommunications system, UMTS)).

The wireless communication system has advantages such as rich service types and strong network control capabilities. However, the wireless communication system is affected by factors such as a limited frequency and a poor transmission environment, resulting in a low access rate (for example, a low uplink rate or a low downlink rate) of a terminal device. Therefore, a broadband wireless access technology may be introduced into the wireless communication system to compensate for the disadvantage of the wireless communication system.

For example, as an example of broadband wireless access technology, a WLAN or worldwide interoperability for microwave access (worldwide interoperability for microwave access, WiMAX) may provide a broadband wireless access service with a high rate, support nomadic and mobile applications, and enhance a capability of the terminal device to access the wireless communication system. Convergence of the wireless communication system and the broadband access technology may be a development trend of the communication system.

It should be noted that the foregoing communication system applicable to this application is merely an example for description, and a communication system applicable to this application is not limited thereto. Unified descriptions are provided herein. Details are not described below again.

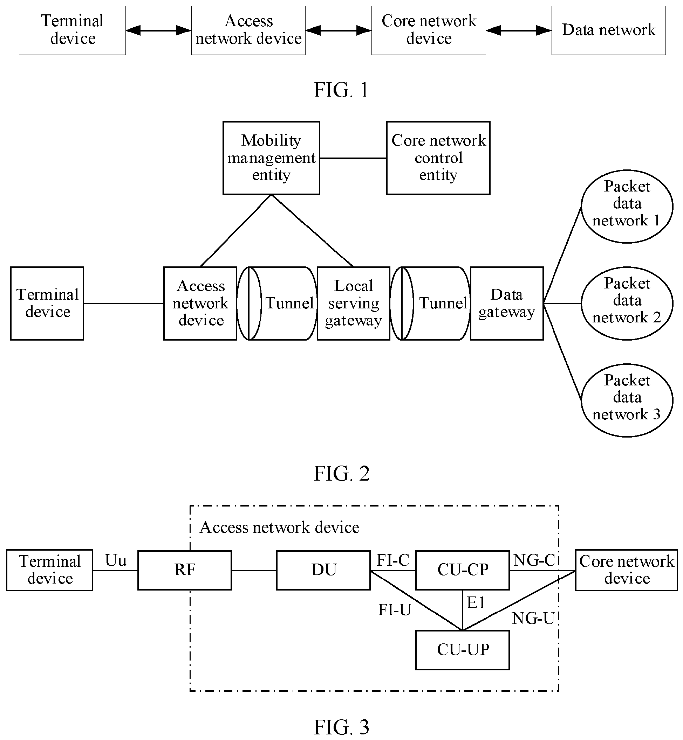

The following uses FIG. 1 as an example to describe the communication system provided in embodiments of this application.

FIG. 1 is a diagram of a communication system according to an embodiment of this application. As shown in FIG. 1, the communication system may include a terminal device, an access network device, a core network device, and a data network.

This application may be applied to various communication scenarios, for example, beam measurement, channel estimation, and signal detection.

The foregoing communication systems and communication scenarios applicable to this application are merely examples for description, a communication system and a communication scenario applicable to this application are not limited thereto, and the foregoing descriptions do not constitute any limitation on the solutions of this application.

The core network device in FIG. 1 may include a user plane network element, a mobility management network element, and a session management network element.

The user plane network element mainly responds to a request of the session management network element, and is used as a connection point between the access network device and the data network.

The mobility management network element is mainly responsible for work such as access authentication and mobility management of the terminal device, and signaling exchange between functional network elements, for example, managing a registration status of a user, a connection status of the user, user registration and network access, tracking area update, and user authentication and key security during cell handover.

The session management network element mainly provides work such as session management (for example, session establishment, modification, or release) of a session of the terminal device, internet protocol (internet protocol, IP) address allocation and management, and user plane network element selection and control.

The terminal device in FIG. 1 may be located in cell coverage of the access network device. The terminal device may perform air interface communication with the access network device on an uplink (uplink, UL) or a downlink (downlink, DL). For example, the terminal device may send uplink data to the access network device in an UL direction on a physical uplink shared channel (physical uplink shared channel, PUSCH), and the access network device may send downlink data to the terminal device in a DL direction on a physical downlink shared channel (physical downlink shared channel, PDSCH).

In FIG. 1, the terminal device may also communicate with the core network device through a specific interface. For example, the terminal device may communicate with the mobility management network element in the core network device through an N1 interface.

After accessing a network, the terminal device may establish a protocol data unit (protocol data unit, PDU) session, access an external data network by using the PDU session, and interact with an application server deployed in the data network.

The terminal device may be a device having a wireless transceiver function, or a chip or a chip system that may be disposed in the device, may allow a user to access a network, and is a device configured to provide voice and/or data connectivity for the user. The terminal device may also be referred to as UE, a subscriber unit (subscriber unit), a terminal (terminal), a mobile station (mobile station, MS), a mobile terminal (mobile terminal, MT), or the like.

Optionally, the terminal device in embodiments of this application may be a user-side device configured to implement a wireless communication function, for example, a terminal or a chip that may be used in the terminal. The terminal may be UE, a subscriber unit, an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) evolved after 5G. The access terminal may be a cellular phone, a smartphone, a cordless phone, a session initiation protocol (session initiation protocol, SIP) phone, a wireless data card, a wireless local loop (wireless local loop, WLL) station, a personal digital assistant (personal digital assistant, PDA), a handset (handset) having a wireless communication function, a laptop computer (laptop computer), a tablet computer, a compute device, or another processing device connected to a wireless modem, a vehicle-mounted device, an uncrewed aerial vehicle, a robot, a smart point of sale (point of sale, POS) machine, a customer premises equipment (customer premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in machine type communication (machine type communication, MTC), a wireless terminal in a smart city (smart city), a wireless terminal in a smart home (smart home) (such as a smart camera, a projector, a display, a television, a speaker, a refrigerator, or a washing machine), a sensor node in the smart city (such as a smart water meter, a smart meter, or a smart air detection node), a smart device in a smart office (such as a printer or a projector), infrastructure in daily life (such as a vending machine, a self-service navigation kiosk of a shopping mall, a self-checkout kiosk, or a self-ordering kiosk), or the like. Alternatively, the terminal may be a terminal having a communication function in an IoT, for example, a terminal in V2X (for example, an internet of vehicles device), a terminal in D2D communication, or a terminal in M2M communication. The terminal may be movable or fixed.

It may be understood that, the communication system may establish a complete network management and control mechanism, to be specific, when a terminal device is disconnected from a network, a resource allocated to the terminal device may be released in time, to effectively manage and use resources in the communication system.

For example, the resource allocated to the terminal device may include one or more of the following: a radio channel, a bearer, various tunnels, or stored information.

The access network device in FIG. 1 may be a device that is deployed in an access network and that can perform wireless communication with the terminal device, or may be a chip or a chip system that may be disposed in the device, or may be a logical node or a logical module or a function implemented by software, and may be configured to implement functions such as a radio physical control function, resource scheduling and radio resource management, radio access control, and mobility management.

Based on the foregoing descriptions of the communication system, in a possible communication scenario, the communication system may be shown in FIG. 2 below. A terminal device may establish, under control of a mobility management entity via an access network device, a tunnel between an access network and a local serving gateway and a tunnel between the local serving gateway and a data gateway, to implement connectivity between the terminal device and a packet data network (packet data network, PDN) (which may also be understood as establishing a tunnel between the terminal device and the packet data network).

For the mobility management network element in FIG. 2, refer to the foregoing descriptions. Details are not described herein again.

The local serving gateway in FIG. 2 is a data anchor for small-range movement of the terminal device, is an interface entity between the access network and a core network, and is mainly responsible for routing and forwarding of user data.

A core network control entity in FIG. 2 is an entity that records and manages user location information and authentication and authorization information.

It may be understood that, in a tunneling technology, a protocol packet transmitted between two endpoint entities of a tunnel is encapsulated by using a protocol, to implement secure transmission and routing of data between the two endpoint entities.

As shown in FIG. 2, the terminal device may access one or more packet data networks (for example, a packet data network 1, a packet data network 2, and a packet data network 3), and different packet data networks may correspond to different packet data services.

The packet data service may be identified by using an access point name (access point name, APN). The access network device may establish connectivity between the terminal device and the data gateway based on the APN. Further, the data gateway may establish connectivity between the data gateway and the PDN based on the APN.

It may be understood that the APN of the packet data service accessed by the terminal device may be preconfigured by the access network device, or may be provided by the terminal device for the access network device.

It may be understood that the access network and the CN can evolve independently, in other words, the access network can shield impact of a plurality of terminal devices on the CN.

Optionally, the access network device in the communication system may be shown in FIG. 3, or the access network device may be a device including a CU node, including a DU node, or including the CU node and the DU node. For example, the access network device may be divided into a CU and a DU from a perspective of logical functions. A part of protocol layer functions are centrally controlled by the CU, a part or all of remaining protocol layer functions are distributed in the DU, and the CU centrally controls the DU. The CU and the DU may be separately disposed, or may be included in a same network element, for example, a baseband unit (baseband unit, BBU). Further, the central unit CU may be divided into a control plane (CU-CP) and a user plane (CU-UP).

The DU may communicate with the terminal device via an RF network element.

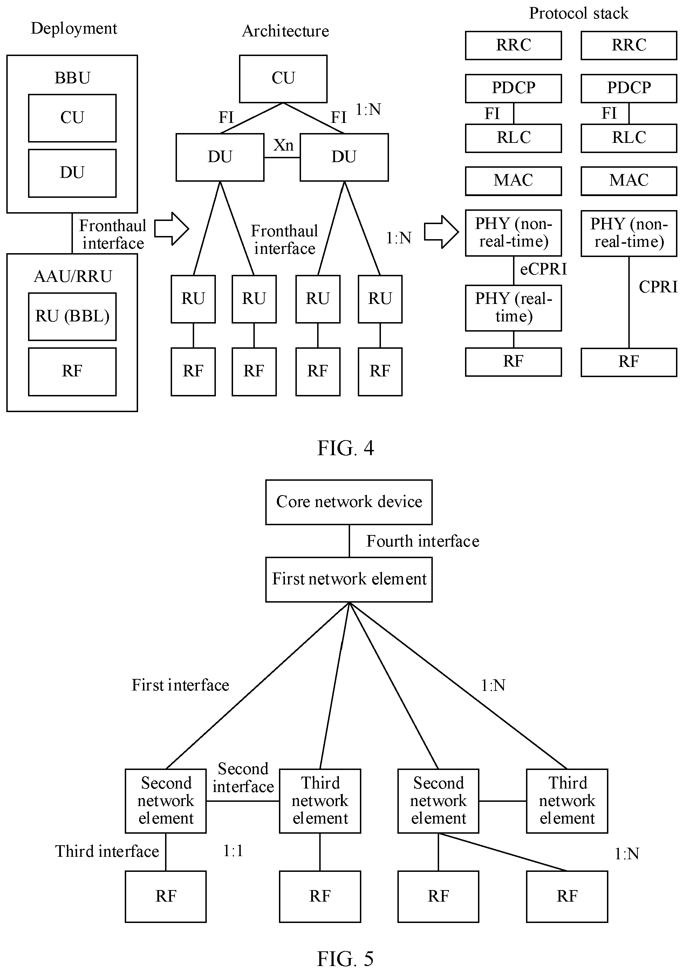

In another example, as shown in FIG. 4 below, the access network device may alternatively be a device including a radio unit (radio unit, RU) or including a CU, a DU, and the RU.

The DU and the CU may be deployed in a baseband unit (baseband unit, BBU), and the RU and an RF may be deployed in an online remote radio unit (remote radio unit, RRU)/active antenna unit (active antenna unit, AAU). An interface between the RRU/AAU and the BBU may be referred to as a fronthaul interface.

The RU may communicate with the terminal device via the RF network element.

It may be understood that in different systems, the CU (or the CU-CP and the CU-UP), the DU, or the RU may also have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of the software module and the hardware module.

It may be understood that the CU and the DU may support flexible deployment, to be specific, the CU and the DU support both distributed deployment and centralized deployment. The CU-CP and the CU-UP may also support flexible deployment, to be specific, the CU-CP and the CU-UP support both distributed deployment and centralized deployment.

As shown in FIG. 4, the interface between the RRU/AAU and the BBU may be referred to as the fronthaul interface. Correspondingly, the access network device may include the fronthaul interface between the DU and the RU, to implement communication between the DU and the RU.

For example, the fronthaul interface may include one or both of the following: a common public radio interface (common public radio interface, CPRI) or an eCPRI.

It may be understood that, the BBU and the RRU/AAU may be connected via a fronthaul network, or the DU and the RU may be connected via the fronthaul network. For example, the fronthaul network includes but is not limited to a direct fiber connection and a wavelength division multiplexing network.

As shown in FIG. 4, the CU, the DU, and the RU are configured to implement different functions. The CU may include an RRC function and a PDCP function. The DU may include an RLC function, a MAC function, and a non-real-time part of a PHY layer function (where the non-real-time part of the PHY layer function may also be described as a high PHY layer function (high PHY, PHY-H), or the non-real-time part of the PHY layer function may also be described as a non-real-time function of the PHY layer function). When the fronthaul interface is the eCPRI, the RU is configured to implement a real-time part of the PHY layer function (where the real-time part of the PHY layer function may also be described as a low PHY layer function (low PHY, PHY-L)).

With the development of communication, a frequency band for communication between an access network device and a terminal device gradually increases. For example, in a sixth generation (sixth generation, 6G) mobile communication system, the access network device introduces a higher frequency band (for example, a centimeter wave or a sub-THz (Sub-THz) spectrum).

However, a high frequency band causes a bandwidth increase (for example, a bandwidth in a unit of GHz). For example, for the centimeter wave, a bandwidth may reach 460 GHz; for the sub-THz spectrum, a bandwidth may reach 1.5 THz; and for a future optical module, a bandwidth may reach 400 GHz.

The bandwidth increase causes a sharp increase in traffic on a fronthaul interface. For example, compared with a fifth generation (fifth generation, 5G) mobile communication system, data volume in the 6G communication system is increased by 10 to 100 times.

Therefore, how to reduce the traffic on the fronthaul interface and improve communication performance becomes an urgent problem to be resolved.

To resolve the foregoing technical problem, this application provides an access network device. The access network device includes a first network element and a second network element communicatively connected to the first network element. The first network element includes an RRC function, a PDCP function, a non-real-time part of an RLC function, and a non-real-time part of a MAC function; and the second network element includes a non-real-time part of a PHY layer function and a real-time part of the PHY layer function.

In embodiments of this application, the access network device may include the first network element and the second network element, and the second network element may include the real-time part and the non-real-time part of the PHY layer function, in other words, the second network element may directly process data transmitted at a PHY layer, without sending the data to the first network element, so that traffic on a fronthaul interface can be reduced, and communication performance can be further improved.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to the communication system shown in FIG. 1, the following describes in detail the access network device provided in embodiments of this application with reference to FIG. 5.

FIG. 5 is a composition diagram of an access network device according to an embodiment of this application. A core network device includes a first network element and a second network element.

For example, the first network element may be an extended CU (extend CU, e-CU), a radio central node (radio central node, RCN), or a radio network area (radio network area, RNA) node, and the second network element may be an extended RU (extend RU, e-RU) or a radio distributed node (radio distributed node, RDN).

The first network element includes an RRC function, a PDCP function, a non-real-time part of an RLC function, and a non-real-time part of a MAC function; and the second network element includes a non-real-time part of a PHY layer function and a real-time part of the PHY layer function (which may be collectively referred to as the PHY layer function). This application provides three possible implementations.

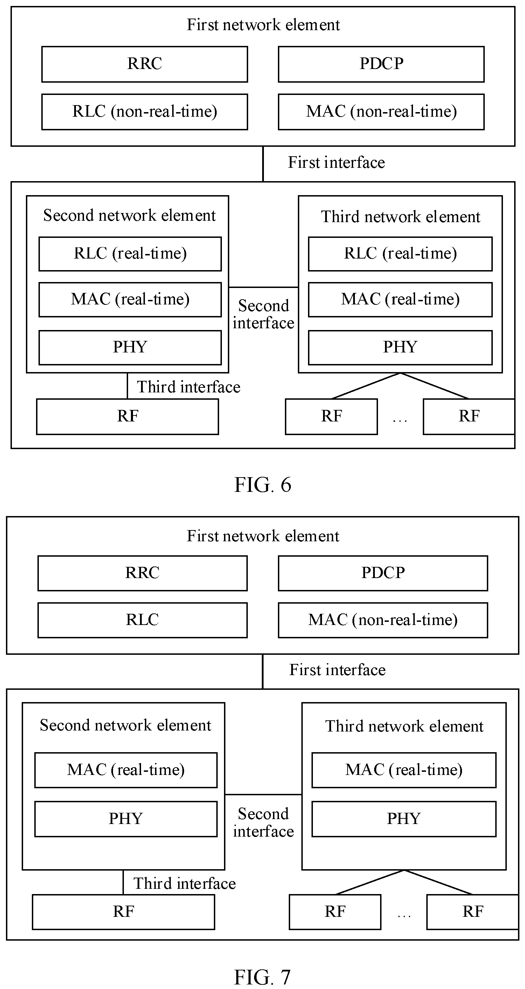

In a first possible implementation, the access network device may be shown in FIG. 6 below. The first network element may include the RRC function, the PDCP function, the non-real-time part (for example, service offloading) of the RLC function, and the non-real-time part (for example, multi-user coordinated scheduling) of the MAC function; and the second network element may include a real-time part (for example, a hybrid automatic repeat request (hybrid automatic repeat request, HARQ)) of the RLC function, a real-time part (for example, data scheduling) of the MAC function, and the PHY layer function (to be specific, the non-real-time part of the PHY layer function and the real-time part of the PHY layer function).

In a second possible implementation, the access network device may be shown in FIG. 7 below. The first network element may include the RRC function, the PDCP function, the RLC function (to be specific, the non-real-time part of the RLC function and a real-time part of the RLC function), and the non-real-time part of the MAC function; and the second network element may include a real-time part of the MAC function and the PHY layer function.

Compared with the first possible implementation, in this possible implementation, the first network element may further include the real-time part of the RLC function, and correspondingly, the second network element does not include the real-time part of the RLC function.

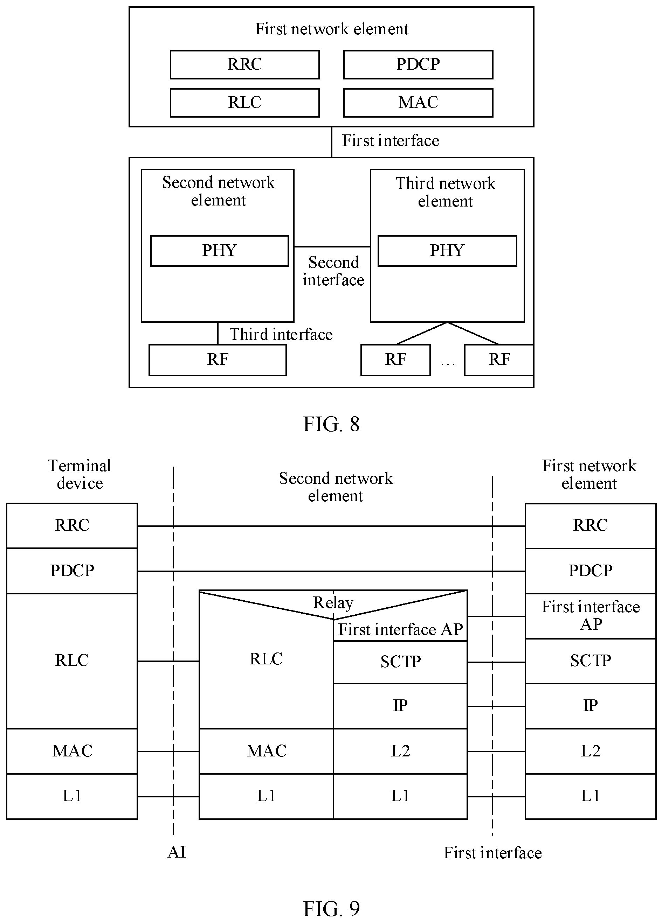

In a third possible implementation, the access network device may be shown in FIG. 8 below. The first network element may include the RRC function, the PDCP function, the RLC function, and the MAC function (to be specific, the non-real-time part of the MAC function and a real-time part of the MAC function); and the second network element may include the PHY layer function.

Compared with the second possible implementation, in this possible implementation, the first network element may further include the real-time part of the MAC layer, and correspondingly, the second network element does not include the real-time part of the MAC layer.

Based on the foregoing three possible implementations, under a same condition, traffic on a fronthaul interface in the first possible implementation may be smaller than traffic on a fronthaul interface in the second possible implementation and traffic on a fronthaul interface in the third possible implementation, and the traffic on the fronthaul interface in the second possible implementation may be smaller than the traffic on the fronthaul interface in the third possible implementation.

Based on the access network device shown in FIG. 5, the access network device may include the first network element and the second network element, and the second network element may include the real-time part and the non-real-time part of the PHY layer function, in other words, the second network element may directly process data transmitted at a PHY layer, without sending the data to the first network element, so that the traffic on the fronthaul interface can be reduced, and communication performance can be further improved. In addition, the second network element may further include the real-time part of the MAC layer function and/or the real-time part of the RLC layer function in addition to the PHY layer function, and the second network element may directly process more data, so that the traffic on the fronthaul interface can be further reduced.

Based on the access network device shown in FIG. 5 to FIG. 8, an interface between the first network element and the second network element is a first interface.

Protocol stacks of the first interface may include a user plane protocol stack, a control plane protocol stack, a management plane protocol stack, and a clock synchronization plane protocol stack.

In a first possible implementation, the control plane protocol stack of the first interface may be determined according to an SCTP.

The SCTP is a reliable universal transport layer protocol used on an IP network. The SCTP is a connection-oriented stream transmission protocol, and can provide stable and ordered data transmission services between two endpoints.

For example, the control plane protocol stack of the first interface may be shown in FIG. 9 below. The control plane protocol stack of the first interface may include L1 (that is, a PHY layer), L2 (that is, a MAC layer), an IP layer, an SCTP layer, and a first interface access point (access point, AP) layer.

An air interface (air interface, AI) is an air interface between a terminal device and the second network element.

The first interface AP layer is used to establish links for different terminal devices. To be specific, after a terminal device accesses the access network device, the access network device may establish a signaling tunnel based on an identity document (identity document, ID) of the terminal device, the first network element may send signaling to the second network element on the tunnel, and the second network element may determine, based on the signaling tunnel, the terminal device associated with the signaling.

For example, the first network element may include an RRC layer, a PDCP layer, the first interface AP layer, the SCTP layer, the IP layer, L2, and L1, the second network element may include the first interface AP layer, the SCTP layer, the IP layer, L2, and L1, and the first network element and the second network element may implement data transmission at the first interface AP layer, the SCTP layer, the IP layer, L2, and L1.

Based on the first possible implementation, the control plane protocol stack of the first interface may be determined according to the SCTP, to provide a feasible solution determining the control plane protocol stack of the first interface.

In a second possible implementation, the user plane protocol stack of the first interface may be determined according to a GTP-U protocol.

The GTP-U protocol may include a transmission control protocol (transmission control protocol, TCP) and a user datagram protocol (user datagram protocol, UDP).

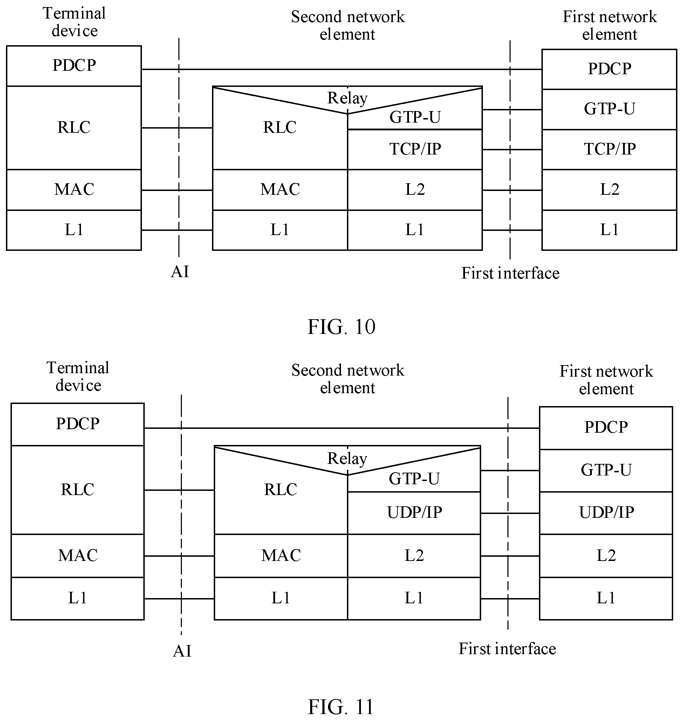

In an example, as shown in FIG. 10 below, the user plane protocol stack of the first interface may be determined according to the TCP, and the user plane protocol stack of the first interface may include L1, L2, a TCP layer/an IP layer, and a GTP-U layer.

For example, the first network element may include a PDCP layer, the GTP-U layer, the TCP/IP layer, L2, and L1, the second network element may include the GTP-U layer, the TCP/IP layer, L2, and L1, and the first network element and the second network element may implement data transmission at the GTP-U layer, the TCP/IP layer, L2, and L1.

In another example, as shown in FIG. 11 below, the user plane protocol stack of the first interface may be determined according to the UDP, and the user plane protocol stack of the first interface may include L1, L2, a UDP layer/an IP layer, and a GTP-U layer.

For example, the first network element may include a PDCP layer, the GTP-U layer, the UDP/IP layer, L2, and L1, the second network element may include the GTP-U layer, the UDP/IP layer, L2, and L1, and the first network element and the second network element may implement data transmission at the GTP-U layer, the UDP/IP layer, L2, and L1.

When the user plane protocol stack of the first interface is determined according to the TCP, the first network element establishes a reliable connection before sending a user plane data stream to the second network element, which can improve communication reliability. When the user plane protocol stack of the first interface is determined according to the UDP, the first network element does not need to establish a connection before sending a user plane data stream to the second network element, which can reduce a delay.

In a third possible implementation, the control plane protocol stack of the first interface, the user plane protocol stack of the first interface, the management plane protocol stack of the first interface, and the clock synchronization plane protocol stack of the first interface may be determined according to an eCPRI protocol.

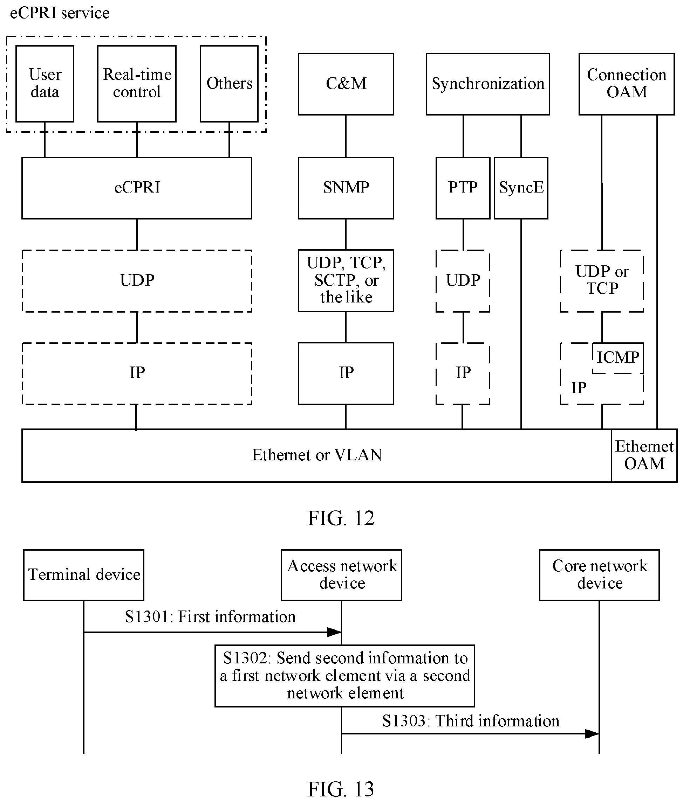

For example, the control plane protocol stack of the first interface, the user plane protocol stack of the first interface, the management plane protocol stack of the first interface, and the clock synchronization plane protocol stack of the first interface may be shown in FIG. 12 below.

A user data module is configured to obtain a user plane data stream. The user plane data stream may be encapsulated at an eCPRI layer, and the encapsulated user plane data stream may be further encapsulated at a UDP layer, an IP layer, and an Ethernet (Ethernet) layer (or a virtual local area network (VLAN) layer) in sequence, or may be directly encapsulated at the Ethernet layer (or the VLAN layer) without passing through the UDP layer and the IP layer. The encapsulated user plane data stream may be transmitted through the first interface.

A real-time control module is configured to obtain a control plane data stream. The control plane data stream may be encapsulated at the eCPRI layer, and the encapsulated control plane data stream may be further encapsulated at the UDP layer, the IP layer, and the Ethernet layer, or may be directly encapsulated at the Ethernet layer without passing through the UDP layer and the IP layer. The encapsulated control plane data stream may be transmitted through the first interface.

A configuration and management (configuration and management, C&M) module is configured to obtain a management plane data stream. The management plane data stream may be encapsulated at a simple network management protocol (simple network management protocol, SNMP) layer, the UDP layer (or a TCP layer or an SCTP layer), the IP layer, and the Ethernet layer (or the VLAN layer) in sequence. The encapsulated management plane data stream may be transmitted through the first interface.

A synchronization module is configured to obtain a clock synchronization plane data stream. The clock synchronization plane data stream may be encapsulated at a precision time protocol (precise time protocol, PTP) layer, and the encapsulated clock synchronization plane data stream may be further encapsulated at the UDP layer, the IP layer, and the Ethernet layer (or the VLAN layer), or may be directly encapsulated at the Ethernet layer (or the VLAN layer) without passing through the UDP layer and the IP layer. Alternatively, the clock synchronization plane data stream may be encapsulated at a synchronous Ethernet (synchronous Ethernet, SyncE) layer, and then is directly encapsulated at the Ethernet layer. The encapsulated clock synchronization plane data stream may be transmitted through the first interface.

An operation, administration and maintenance (operation, administration and maintenance, OAM) plane of the Ethernet is used for network monitoring and management, for example, fault detection and processing. A connection OAM module is configured to obtain the management plane data stream. The management plane data stream may be encapsulated at the UDP/TCP layer and the IP layer (or an internet control message protocol (internet control message protocol, ICMP) layer), and the encapsulated management plane data stream is encapsulated at the Ethernet layer. Alternatively, the management plane data stream may be directly encapsulated at the Ethernet layer. The encapsulated management plane data stream may be transmitted through the first interface.

Based on the access network device shown in FIG. 5 to FIG. 12, a communication method shown in FIG. 13 below may be implemented. Specific steps may be as follows.

S1301: An access network device receives first information from a terminal device via a second network element of the access network device.

The second network element includes a non-real-time part of a PHY layer function and a real-time part of the PHY layer function.

Optionally, the second network element may further include a real-time part of an RLC function and/or a real-time part of a MAC function.

For the second network element, refer to the descriptions of the second network element in FIG. 5. Details are not described herein again.

S1302: The access network device sends second information to a first network element of the access network device via the second network element.

The second information is information obtained by the second network element processing the first information.

The first network element includes an RRC function, a PDCP function, a non-real-time part of the RLC function, and a non-real-time part of the MAC function.

Optionally, the first network element may further include the real-time part of the RLC function; or the first network element may further include the real-time part of the RLC function and the real-time part of the MAC function.

For the first network element, refer to the descriptions of the first network element in FIG. 5. Details are not described herein again.

S1303: The access network device sends third information to a core network device via the first network element.

The third information is information obtained by the first network element processing the second information.

Based on the communication method shown in FIG. 13, the second network element may include the non-real-time part of the PHY layer function and the real-time part of the PHY layer function, in other words, the second network element may directly process data transmitted at a PHY layer, without sending the data to the first network element, so that traffic on a fronthaul interface can be reduced, and communication performance can be further improved. The terminal device may communicate with the core network device via the first network element and the second network element in the access network device.

In addition, the second network element may further include the real-time part of the MAC layer function and/or the real-time part of the RLC layer function in addition to the PHY layer function, and the second network element may directly process more data, so that the traffic on the fronthaul interface can be further reduced.

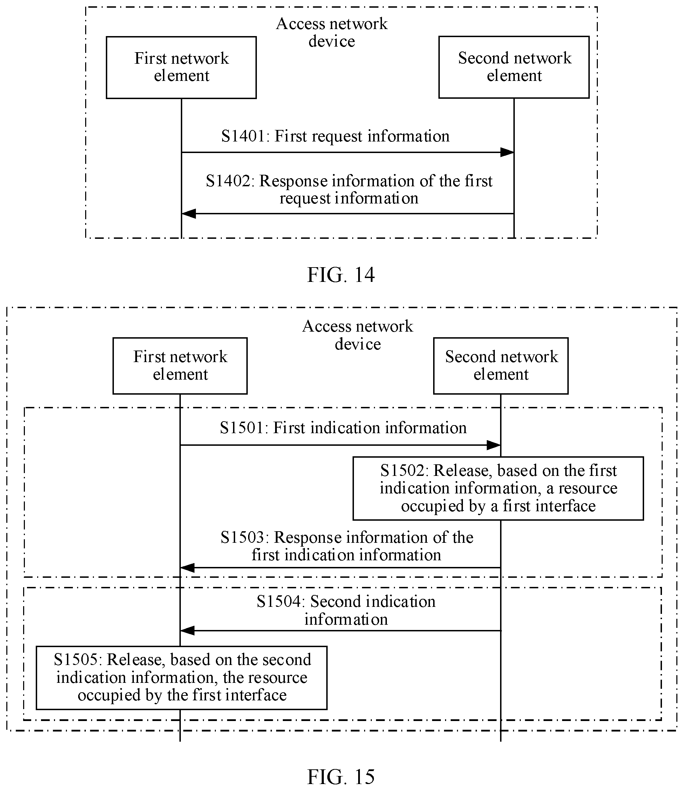

Optionally, the first network element and the second network element may configure a first interface with reference to a communication method shown in FIG. 14 below. Specific steps may be shown in FIG. 14 below.

S1401: An access network device sends first request information to a second network element via a first network element.

The first request information is used to request to configure a first interface, and the first request information includes PHY layer configuration information.

In a first possible implementation, when the first network element includes an RRC function, a PDCP function, a non-real-time part of an RLC function, and a non-real-time part of a MAC function, and the second network element includes a real-time part of the RLC function, a real-time part of the MAC function, and a PHY layer function, the first request information may include RLC configuration information, MAC configuration information, and the PHY layer configuration information.

When the first request information includes the RLC configuration information, the MAC configuration information, and the PHY layer configuration information, data transmission between the first network element and the second network element at an RLC layer, a MAC layer, and a PHY layer may be implemented.

In a second possible implementation, when the first network element includes an RRC function, a PDCP function, an RLC function, and a non-real-time part of a MAC function, and the second network element includes a real-time part of the MAC function and a PHY layer function, the first request information may include MAC configuration information and the PHY layer configuration information.

When the first request information includes the PHY layer configuration information and the MAC configuration information, data transmission between the first network element and the second network element at a PHY layer and a MAC layer may be implemented.

In a third possible implementation, when the first network element includes an RRC function, a PDCP function, an RLC function, and a MAC function, and the second network element includes a PHY layer function, the first request information may include the PHY layer configuration information.

When the first request information may include the PHY layer configuration information, data transmission between the first network element and the second network element at a PHY layer may be implemented.

It may be understood that, when the first network element is powered on, or the first network element is initially configured, the first network element may send the first request information to the second network element.

S1402: The access network device sends response information of the first request information to the first network element via the second network element.

Based on the communication method shown in FIG. 14, the first network element and the second network element may configure the first interface based on the first request information, to provide a feasible solution for configuring the first interface. The first request information may include the PHY layer configuration information, so that data transmission between the first network element and the second network element at the PHY layer can be implemented.

In addition, when the first request information further includes the RLC configuration information and the MAC configuration information, data transmission between the first network element and the second network element at the RLC layer and the MAC layer may be implemented; or when the first request information further includes the MAC configuration information, data transmission between the first network element and the second network element at the MAC layer may be implemented.

Optionally, the first network element and the second network element may release, with reference to a communication method shown in FIG. 15 below, a resource occupied by the first interface. This application provides two possible designs.

In a first possible design, the first network element may indicate the second network element to release the resource occupied by the first interface.

S1501: The access network device sends first indication information to the second network element via the first network element.

The first indication information indicates to release the resource occupied by the first interface.

For example, the first indication information is one bit. When a bit value is 1, it may indicate to release the resource occupied by the first interface; or when a bit value is 0, it may indicate to release the resource occupied by the first interface.

The first indication information may carry a release cause (release cause).

In an example, the first indication information is three bits. A 1^{st} bit may indicate whether to release the resource occupied by the first interface, and a 2^{nd} bit and a 3^{rd} bit may indicate the release cause. When a bit value is 100, it may indicate to release the resource occupied by the first interface, and the release cause is a cause 1; or when a bit value is 101, it may indicate to release the resource occupied by the first interface, and the release cause is a cause 2; or when a bit value is 110, it may indicate to release the resource occupied by the first interface, and the release cause is a cause 3; or when a bit value is 111, it may indicate to release the resource occupied by the first interface, and the release cause is a cause 4.

Alternatively, when a bit value is 000, it may indicate to release the resource occupied by the first interface, and the release cause is a cause 1; or when a bit value is 001, it may indicate to release the resource occupied by the first interface, and the release cause is a cause 2; or when a bit value is 010, it may indicate to release the resource occupied by the first interface, and the release cause is a cause 3; or when a bit value is 011, it may indicate to release the resource occupied by the first interface, and the release cause is a cause 4.

In another example, the first indication information is two bits. The first indication information may indicate the release cause, and the second network element may directly release, based on the release cause, the resource occupied by the first interface. When a bit value is 00, it may indicate that the release cause is a cause 1; or when a bit value is 01, it may indicate that the release cause is a cause 2; or when a bit value is 10, it may indicate that the release cause is a cause 3; or when a bit value is 11, it may indicate that the release cause is a cause 4.

S1502: The access network device releases, based on the first indication information via the second network element, the resource occupied by the first interface.

S1503: The access network device sends response information of the first indication information to the first network element via the second network element.

It may be understood that the first network element may release, based on the response information of the first indication information, the resource occupied by the first interface, or the first network element may release, based on the first indication information, the resource occupied by the first interface. This is not limited.

It should be noted that there is no strict sequential order between S1502 and S1503.

In a second possible design, the second network element may indicate the first network element to release the resource occupied by the first interface.

S1504: The access network device sends second indication information to the first network element via the second network element.

The second indication information indicates to release the resource occupied by the first interface.

Optionally, the second network element may release, based on the second indication information, the resource occupied by the first interface.

For the second indication information, refer to the descriptions of the first indication information. Details are not described herein again.

S1505: The access network device releases, based on the second indication information via the first network element, the resource occupied by the first interface.

It may be understood that the second network element may also release, based on the second indication information, the resource occupied by the first interface.

Based on the communication method shown in FIG. 15, when the first network element ends communication with the second network element, the first network element may send the first indication information to the second network element, to indicate the second network element to release the resource occupied by the first interface, which may improve resource utilization and further improve communication effectiveness. When the second network element ends communication with the first network element, the second network element may send the second indication information to the first network element, to indicate the first network element to release the resource occupied by the first interface, which may improve resource utilization and further improve communication effectiveness.

Optionally, the first network element may be configured to transparently transmit a downlink control transmission message to the second network element; or the second network element may be configured to transparently transmit an uplink control transmission message to the first network element.

The first network element and the second network element may construct a message transparent transmission channel.

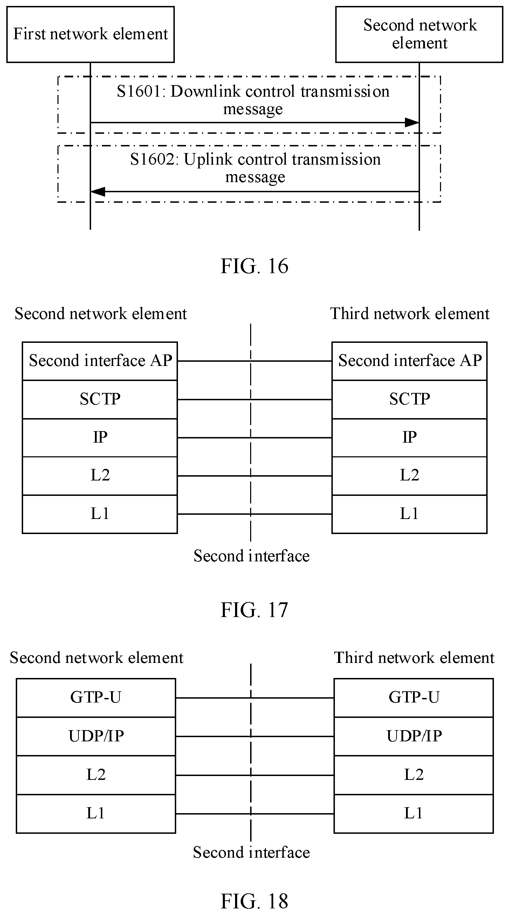

In an example, as shown in S1601 in FIG. 16 below, the first network element may send the downlink control transmission message to the second network element (where the downlink control transmission message may carry information that needs to be transparently transmitted).

In another example, as shown in S1602 in FIG. 16 below, the second network element may send the uplink control transmission message to the first network element (where the uplink control transmission message may carry information that needs to be transparently transmitted).

Optionally, as shown in FIG. 5, the first network element may be communicatively connected to the core network device, and an interface between the core network device and the first network element may be a fourth interface.

For example, functions of the fourth interface may include a function of an NG interface defined in the 3GPP, and may further include an integrated sensing function, a positioning function, and the like.

Based on the access network device shown in FIG. 5 to FIG. 16, the access network device may further include a third network element communicatively connected to the first network element and the second network element.

For example, the third network element may be communicatively connected to the first network element, and may also be communicatively connected to the second network element.

The third network element may include the non-real-time part of the PHY layer function and the real-time part of the PHY layer function.

Optionally, the third network element may further include the real-time part of the RLC function and the real-time part of the MAC function; or the third network element may further include the real-time part of the MAC function.

For example, as shown in FIG. 5, the first network element may be communicatively connected to the second network element, or the first network element may be communicatively connected to the second network element and the third network element.

It may be understood that more than one second network element and more than one third network element are communicatively connected to the first network element.

It may be understood that the third network element and the second network element may be network elements of a same type. For specific descriptions, refer to the foregoing descriptions of the second network element. Details are not described herein again.

It may be understood that the third network element may include the non-real-time part of the PHY layer function and the real-time part of the PHY layer function, in other words, the third network element may directly process data transmitted at the PHY layer, without sending the data to the first network element, so that the traffic on the fronthaul interface can be reduced, and communication performance can be improved. In addition, the third network element may further include the real-time part for implementing the RLC layer function and/or the real-time part of the MAC layer function in addition to the PHY layer function, and the third network element may directly process more data, so that the traffic on the fronthaul interface can be further reduced.

Based on the access network device shown in FIG. 5 to FIG. 16, an interface between the second network element and the third network element is a second interface.

In a first possible implementation, a control plane protocol stack of the second interface may be determined according to the SCTP.

For example, the control plane protocol stack of the second interface may be shown in FIG. 17 below, and the control plane protocol stack of the second interface may include L1, L2, an IP layer, an SCTP layer, and a second interface AP layer.

The second interface AP layer is similar to the first interface AP layer. Details are not described herein again.

For example, the second network element and the third network element may include the second interface AP layer, the SCTP layer, the IP layer, L2, and L1, and the second network element and the third network element may implement data transmission at the second interface AP layer, the SCTP layer, the IP layer, L2, and L1.

In a second possible implementation, a user plane protocol stack of the second interface may be determined according to the GTP-U.

For example, the user plane protocol stack of the second interface may be shown in FIG. 18 below, and the user plane protocol stack of the second interface may include L1, L2, a UDP layer/an IP layer, and a GTP-U layer.

For example, the second network element and the third network element may include the GTP-U layer, the UDP/IP layer, L2, and L1, and the second network element and the third network element may implement data transmission at the GTP-U layer, the UDP/IP layer, L2, and L1.

Based on the access network device shown in FIG. 5 to FIG. 18, the access network device may further include an RF network element communicatively connected to the second network element or the third network element.

The second network element may be communicatively connected to one or more RF network elements, and/or the third network element may be communicatively connected to one or more RF network elements.

An interface between the second network element (or the third network element) and the RF network element may be a third interface.

In a possible implementation, the third interface may be a peripheral interface, and a protocol stack of the third interface may be determined according to the eCPRI protocol.

The protocol stack of the third interface may be shown in FIG. 12. Details are not described herein again.

It may be understood that the third interface may alternatively be an interface implemented internally.

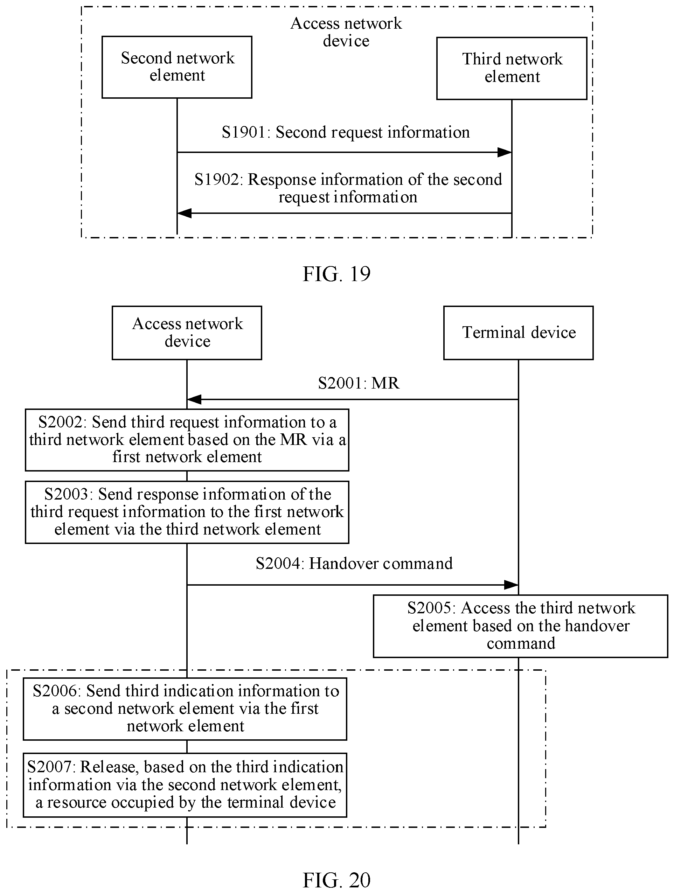

Optionally, the second network element and the third network element may configure the second interface with reference to a communication method shown in FIG. 19 below. Specific steps may be shown in FIG. 19 below.

S1901: An access network device sends second request information to a third network element of the access network device via a second network element.

The second request information is used to request to configure a second interface, and the second request information includes PHY layer configuration information.

In a first possible implementation, when a first network element includes an RRC function, a PDCP function, a non-real-time part of an RLC function, and a non-real-time part of a MAC function, and the second network element includes a real-time part of the RLC function, a real-time part of the MAC function, and a PHY layer function, the second request information may include RLC configuration information, MAC configuration information, and the PHY layer configuration information.

When the second request information includes the RLC configuration information, the MAC configuration information, and the PHY layer configuration information, data transmission between the second network element and the third network element at an RLC layer, a MAC layer, and a PHY layer may be implemented.

In a second possible implementation, when a first network element includes an RRC function, a PDCP function, an RLC function, and a non-real-time part of a MAC function, and the second network element includes a real-time part of the MAC function and a PHY layer function, the second request information may include MAC configuration information and the PHY layer configuration information.

When the second request information includes the MAC configuration information and the PHY layer configuration information, data transmission between the second network element and the third network element at a MAC layer and a PHY layer may be implemented.

In a third possible implementation, when a first network element includes an RRC function, a PDCP function, an RLC function, and a MAC function, and the second network element includes a PHY layer function, the second request information may include the PHY layer configuration information.

The second request information includes the PHY layer configuration information, so that data transmission between the second network element and the third network element at a PHY layer can be implemented.

S1902: The access network device sends response information of the second request information to the second network element via the third network element.

Based on the communication method shown in FIG. 19, the second network element and the third network element may configure the second interface based on the second request information, to provide a feasible solution for configuring the second interface. The second request information includes the PHY layer configuration information, so that data transmission between the second network element and the third network element at the PHY layer can be implemented.

In addition, when the second request information further includes the RLC configuration information and the MAC configuration information, data transmission between the second network element and the third network element at the RLC layer and the MAC layer may be implemented; or when the second request information further includes the MAC configuration information, data transmission between the second network element and the third network element at the MAC layer may be implemented.

Optionally, this application further provides a communication method, to hand over a terminal device from a second network element to a third network element. Specific steps may be shown in FIG. 20 below.

S2001: An access network device receives an MR from a terminal device via a first network element.

For example, the terminal device may receive measurement signals from a second network element and a third network element, determine the MR based on the measurement signals, and send the MR to the first network element.

S2002: The access network device sends third request information to the third network element of the access network device based on the MR via the first network element.

The third request information is used to request to allocate a resource for the terminal device to access the third network element.

For example, the terminal device may receive the measurement signals from the second network element and the third network element, determine the MR based on the measurement signals, and send the MR to the first network element.

S2003: The access network device sends response information of the third request information to the first network element via the third network element.

For example, the response information of the third request information may include the resource (for example, a time domain resource or a frequency domain resource) for the terminal device to access the third network element.

S2004: The access network device sends a handover command to the terminal device based on the response information of the third request information via the first network element.

The handover command indicates the terminal device to be handed over from the second network element to the third network element.

It may be understood that the first network element may determine the third network element based on the measurement report from the terminal device. Further, the first network element may determine, based on the response information of the third request information from the third network element, the resource for the terminal device to access the third network element, to ensure that the terminal device can access the third network element, thereby improving communication reliability.

S2005: The terminal device accesses the third network element based on the handover command.

Optionally, the access network device may further release a resource occupied by the terminal device. Specific steps may be as follows.

S2006: The access network device sends third indication information to the second network element via the first network element.

The third indication information indicates to release the resource occupied by the terminal device.

For example, the third indication information may be one bit. When a bit value is 1, it may indicate to release the resource occupied by the terminal device; or when a bit value is 0, it may indicate to release the resource occupied by the terminal device.

S2007: The access network device releases, based on the third indication information via the second network element, the resource occupied by the terminal device.

Based on the communication method shown in FIG. 20, the first network element may determine the third network element based on the measurement report from the terminal device. Further, the first network element may determine, based on the response information of the third request information from the third network element, the resource for the terminal device to access the third network element, to ensure that the terminal device can access the third network element, thereby improving communication reliability. In addition, the second network element may release, based on the third indication information, the resource occupied by the terminal device, so that resource utilization can be improved, and communication effectiveness can be further improved.

Optionally, different from the first network element receiving the MR from the terminal device, the second network element may also receive the MR from the terminal device, and send fourth request information to the third network element based on the MR.

The fourth request information is used to request to allocate the resource for the terminal device to access the third network element.

It may be understood that the terminal device may move in coverage of the second network element, and the terminal device may send the MR to the second network element.

It may be understood that the second network element may communicate with the third network element, and the second network element may send the fourth request information to the third network element.

Further, the second network element may receive response information of the fourth request information from the third network element, and send a handover command to the terminal device based on the response information of the fourth request information.

The handover command indicates the terminal device to be handed over from the second network element to the third network element.

It may be understood that, different from the first network element indicating the terminal device to be handed over from the second network element to the third network element, the second network element may also indicate the terminal device to be handed over from the second network element to the third network element, so that traffic transmission between the second network element (or the third network element) and the first network element can be reduced, thereby reducing traffic on a fronthaul interface and improving communication performance.

The foregoing descriptions are provided by using an example in which the first network element and the second network element are deployed in one device (that is, the access network device). It may be understood that the first network element and the second network element may alternatively be independently deployed. This is not limited.

It should be noted that the terminal device, the access network device, the first network element, the second network element, the third network element, and the core network device in embodiments of this application are merely examples in the accompanying drawings, and quantities of the devices are not limited.

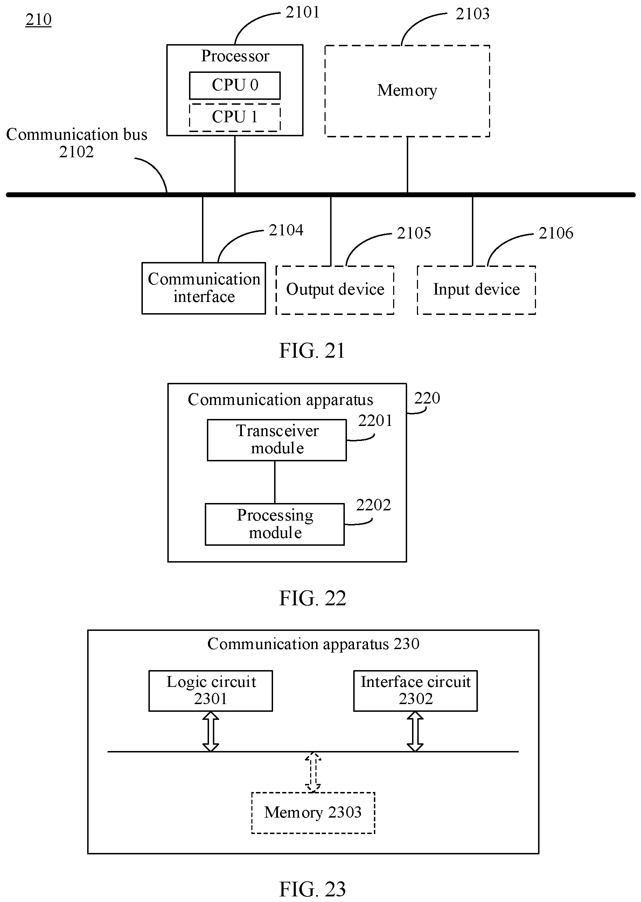

Optionally, based on the foregoing descriptions of the terminal device, the access network device, and the core network device, in a specific implementation, the terminal device, the access network device, the first network element, the second network element, the third network element, and the core network device may alternatively use a composition structure shown in FIG. 21, or include components shown in FIG. 21. FIG. 21 is a composition diagram of a communication apparatus 210 according to an embodiment of this application. The communication apparatus 210 may be a terminal device or a chip or a system on chip in the terminal device; or may be an access network device or a chip or a system on chip in the access network device; or may be a first network element or a chip or a system on chip in the first network element; or may be a second network element or a chip or a system on chip in the second network element; or may be a third network element or a chip or a system on chip in the third network element; or may be a core network device or a chip or a system on chip in the core network device.

As shown in FIG. 21, the communication apparatus 210 includes one or more processors 2101. Further, the communication apparatus 210 may include a communication bus 2102 and at least one communication interface (where FIG. 21 is merely an example, and an example in which the communication apparatus 210 includes a communication interface 2104 and one processor 2101 is used for description). Optionally, the communication apparatus 210 may further include a memory 2103.

The processor 2101 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 2101 may include one or more CPUs, for example, a CPU 0 and a CPU 1 in FIG. 21.

The communication bus 2102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 21, but this does not indicate that there is only one bus or only one type of bus. The communication bus 2102 is configured to connect different components in the communication apparatus 210, so that the different components in the communication apparatus 210 can communicate and interact with each other.

The communication interface 2104 may be a transceiver module, and is configured to communicate with another device or a communication network. The communication network may be, for example, an Ethernet, a RAN, or a WLAN. For example, the communication interface 2104 may be an apparatus, for example, a transceiver or a transceiver machine. Alternatively, the communication interface 2104 may be a transceiver circuit located in the processor 2101, and is configured to implement signal input and signal output of the processor.

The memory 2103 may be an apparatus having a storage function. For example, the memory 2103 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disk storage (including a compact disc, a laser disc, an optical disc, a digital versatile disc, a Blu-ray disc, and the like), a magnetic disk storage medium or another magnetic storage device, or any other medium that can be configured to carry or store expected program code in an instruction form or a data structure form and that can be accessed by a computer, but is not limited thereto. The memory may exist independently, and is connected to the processor through the communication bus 2102. The memory may alternatively be integrated with the processor.

For example, the memory 2103 is configured to store computer-executable instructions for executing the solutions of this application, and the processor 2101 controls the execution. The processor 2101 is configured to execute the computer-executable instructions stored in the memory 2103, to implement the communication method provided in embodiments of this application.

Alternatively, optionally, in this embodiment of this application, the processor 2101 may perform processing related functions in the communication method provided in the foregoing embodiments of this application, and the communication interface 2104 is responsible for communicating with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the communication apparatus 210 may further include an output device 2105 and an input device 2106. The output device 2105 communicates with the processor 2101, and may display information in a plurality of manners. For example, the output device 2105 may be a liquid crystal display (liquid crystal display, LCD), a light emitting diode (light emitting diode, LED) display device, a cathode ray tube (cathode ray tube, CRT) display device, a projector (projector), or the like. The input device 2106 communicates with the processor 2101, and may receive input from a user in a plurality of manners. For example, the input device 2106 may be a mouse, a keyboard, a touchscreen device, or a sensor device.

It should be noted that the composition structure shown in FIG. 21 does not constitute a limitation on the communication apparatus. In addition to the components shown in FIG. 21, the communication apparatus may include more or fewer components than those shown in the figure, or combine some components, or have different component arrangements.

In this embodiment of this application, the chip system may include a chip, or may include the chip and another discrete component.

It should be noted that embodiments of this application may be implemented separately, or may be implemented in combination. This is not limited. Unless otherwise specified or there is a logic conflict, terms and/or descriptions in different embodiments provided in this application are consistent and may be referenced by each other. Technical features in different embodiments may be combined to form a new embodiment based on an internal logical relationship.

It may be understood that in embodiments of this application, an execution body may perform some or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

The foregoing mainly describes the solutions provided in this application from the perspective of interaction between devices. Correspondingly, this application further provides a communication apparatus, and the communication apparatus is configured to implement the foregoing methods. The communication apparatus may be the terminal device in the foregoing method embodiments, or an apparatus including the terminal device, or a component that can be used for the terminal device; or the communication apparatus may be the access network device in the foregoing method embodiments, or an apparatus including the access network device, or a component that can be used for the access network device; or the communication apparatus may be the first network element in the foregoing method embodiments, or an apparatus including the first network element, or a component that can be used for the first network element; or the communication apparatus may be the second network element in the foregoing method embodiments, or an apparatus including the second network element, or a component that can be used for the second network element; or the communication apparatus may be the third network element in the foregoing method embodiments, or an apparatus including the third network element, or a component that can be used for the third network element; or the communication apparatus may be the core network device in the foregoing method embodiments, or an apparatus including the core network device, or a component that can be used for the core network device.

It may be understood that, to implement the foregoing functions, the communication apparatus includes a hardware structure and/or a software module for performing each corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

When each functional module is obtained through division based on each corresponding function, FIG. 22 shows a communication apparatus 220. The communication apparatus 220 may perform actions performed by the terminal device, the access network device, the first network element, the second network element, the third network element, and the core network device in the foregoing method. All related content of the steps in the foregoing method embodiments may be referenced to function descriptions of the corresponding functional modules. For technical effects that can be achieved by the communication apparatus, refer to the foregoing method embodiments. Details are not described herein again.

The communication apparatus 220 may include a transceiver module 2201 and a processing module 2202. For example, the communication apparatus 220 may be a communication device, or may be a chip used in the communication device, or another combined device or component that has a function of the communication apparatus. When the communication apparatus 220 is a communication device, the transceiver module 2201 may be a transceiver, where the transceiver may include an antenna, a radio frequency circuit, and the like; and the processing module 2202 may be a processor (or a processing circuit), for example, a baseband processor, where the baseband processor may include one or more CPUs. When the communication apparatus 220 is a component that has a function of the communication apparatus, the transceiver module 2201 may be a radio frequency unit; and the processing module 2202 may be a processor (or a processing circuit), for example, a baseband processor. When the communication apparatus 220 is a chip system, the transceiver module 2201 may be an input/output interface of a chip (for example, a baseband chip); and the processing module 2202 may be a processor (or a processing circuit) of the chip system, and may include one or more central processing units. It should be understood that in this embodiment of this application, the transceiver module 2201 may be implemented by a transceiver or a transceiver related circuit component; and the processing module 2202 may be implemented by a processor or a processor related circuit component (or referred to as a processing circuit).

For example, the transceiver module 2201 may be configured to perform all sending and receiving operations performed by the communication apparatus in the foregoing embodiments, and/or configured to support another process of the technology described in this specification; and the processing module 2202 may be configured to perform all operations other than the sending and receiving operations performed by the communication apparatus in the foregoing embodiments, and/or configured to support another process of the technology described in this specification.

In this application, the communication apparatus 220 is presented in a form of dividing functional modules in an integrated manner. The "module" herein may be an ASIC, a circuit, a processor and a memory that execute one or more software or firmware programs, an integrated logic circuit, and/or another component that can provide the foregoing functions.

In some embodiments, in terms of hardware implementation, a person skilled in the art may figure out that the communication apparatus 220 may be in a form of the communication apparatus 210 shown in FIG. 21.

In an example, the function/implementation process of the processing module 2202 in FIG. 22 may be implemented by the processor 2101 in the communication apparatus 210 shown in FIG. 21 by invoking computer-executable instructions stored in the memory 2103. The function/implementation process of the transceiver module 2201 in FIG. 22 may be implemented by the communication interface 2104 in the communication apparatus 210 shown in FIG. 21.

In another possible implementation, the transceiver module 2201 in FIG. 22 may be replaced with a transceiver, and a function of the transceiver module 2201 may be integrated into the transceiver. The processing module 2202 may be replaced with a processor, and a function of the processing module 2202 may be integrated into the processor. Further, the communication apparatus 220 shown in FIG. 22 may include a memory.

Alternatively, when the processing module 2202 is replaced with a processor, and the transceiver module 2201 is replaced with a transceiver, the communication apparatus 220 in this embodiment of this application may be a communication apparatus 230 shown in FIG. 23. The processor may be a logic circuit 2301, and the transceiver may be an interface circuit 2302. Further, the communication apparatus 230 shown in FIG. 23 may include a memory 2303.

An embodiment of this application further provides a computer program product. When the computer program product is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the computer-readable storage medium. When the program is executed, the procedures in the foregoing method embodiments may be performed. The computer-readable storage medium may be an internal storage unit in the terminal (including a data transmit end and/or a data receive end) in any one of the foregoing embodiments, for example, a hard disk drive or an internal memory of the terminal. The computer-readable storage medium may alternatively be an external storage device of the foregoing terminal, for example, a plug-in hard disk, a smart media card (smart media card, SMC), a secure digital (secure digital, SD) card, and a flash card (flash card) that are configured on the terminal. Further, the computer-readable storage medium may include both an internal storage unit and an external storage device of the terminal. The computer-readable storage medium is configured to store the computer program and other programs and data required by the terminal. The computer-readable storage medium may be further configured to temporarily store data that has been output or is to be output. This application further provides a computer-readable storage medium. The computer-readable storage medium stores a computer program or instructions. When the computer program or the instructions are executed by a computer, functions in any one of the foregoing method embodiments are implemented.

The foregoing descriptions about implementations allow a person skilled in the art to understand that, for the purpose of convenient and brief description, division of the foregoing functional modules is used as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such understanding, the technical solutions in embodiments of this application essentially or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, such as a USB flash drive, a removable hard disk, a ROM, a RAM, a magnetic disk, or an optical disc.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An access network device, comprising a first network element and a second network element communicatively connected to the first network element, wherein
the first network element comprises a radio resource control function, a packet data convergence protocol function, a non-real-time part of a radio link control function, and a non-real-time part of a medium access control function; and
the second network element comprises a non-real-time part of a physical layer function and a real-time part of the physical layer function.

2. The access network device according to claim 1, wherein
the second network element further comprises a real-time part of the radio link control function and a real-time part of the medium access control function.

3. The access network device according to claim 1, wherein
the first network element further comprises a real-time part of the radio link control function.

4. The access network device according to claim 3, wherein
the second network element further comprises a real-time part of the medium access control function.

5. The access network device according to claim 3, wherein
the first network element further comprises a real-time part of the medium access control function.

6. The access network device according to any one of claims 1 to 5, wherein an interface between the first network element and the second network element is a first interface; and
a control plane protocol stack of the first interface is determined according to a stream control transmission protocol.

7. The access network device according to any one of claims 1 to 6, wherein the interface between the first network element and the second network element is the first interface; and
a user plane protocol stack of the first interface is determined according to a general packet radio service tunneling protocol-user plane.

8. The access network device according to any one of claims 1 to 5, wherein an interface between the first network element and the second network element is a first interface; and
a protocol stack of the first interface is determined according to an enhanced common public radio interface protocol.

9. The access network device according to any one of claims 1 to 8, wherein the access network device further comprises a third network element communicatively connected to the first network element and the second network element, the third network element comprises the non-real-time part of the physical layer function and the real-time part of the physical layer function, and an interface between the second network element and the third network element is a second interface; and
a control plane protocol stack of the second interface is determined according to the stream control transmission protocol.

10. The access network device according to any one of claims 1 to 9, wherein the access network device further comprises the third network element communicatively connected to the first network element and the second network element, the third network element comprises the non-real-time part of the physical layer function and the real-time part of the physical layer function, and the interface between the second network element and the third network element is the second interface; and
a user plane protocol stack of the second interface is determined according to the general packet radio service tunneling protocol-user plane.

11. The access network device according to claim 9 or 10, wherein
the third network element further comprises the real-time part of the medium access control function.

12. The access network device according to claim 11, wherein
the third network element further comprises the real-time part of the radio link control function.

13. The access network device according to any one of claims 1 to 12, wherein the access network device further comprises a radio frequency network element communicatively connected to the second network element, and an interface between the second network element and the radio frequency network element is a third interface; and
the third interface is a peripheral interface, and a protocol stack of the third interface is determined according to the enhanced common public radio interface protocol.

14. The access network device according to any one of claims 1 to 13, wherein
the first network element is configured to send first request information to the second network element, wherein the first request information is used to request to configure the first interface, the first request information comprises physical layer configuration information, and the first interface is the interface between the first network element and the second network element; and
the second network element is configured to send response information of the first request information to the first network element.

15. The access network device according to claim 14, wherein
the first request information further comprises radio link control configuration information and medium access control configuration information; or
the first request information further comprises medium access control configuration information.

16. The access network device according to any one of claims 1 to 15, wherein
the first network element is configured to send first indication information to the second network element, wherein the first indication information indicates to release a resource occupied by the first interface, and the first interface is the interface between the first network element and the second network element; and
the second network element is configured to release, based on the first indication information, the resource occupied by the first interface, and send response information of the first indication information to the first network element.

17. The access network device according to any one of claims 1 to 15, wherein
the second network element is configured to send second indication information to the first network element, wherein the second indication information indicates to release a resource occupied by the first interface, and the first interface is the interface between the first network element and the second network element; and
the first network element is configured to release, based on the second indication information, the resource occupied by the first interface.

18. The access network device according to any one of claims 1 to 17, wherein
the first network element is configured to transparently transmit a downlink control transmission message to the second network element; or
the second network element is configured to transparently transmit an uplink control transmission message to the first network element.

19. The access network device according to any one of claims 1 to 18, wherein the access network device further comprises the third network element communicatively connected to the first network element and the second network element, and the third network element comprises the non-real-time part of the physical layer function and the real-time part of the physical layer function;
the second network element is configured to send second request information to the third network element, wherein the second request information is used to request to configure the second interface, the second request information comprises the physical layer configuration information, and the second interface is the interface between the second network element and the third network element; and
the third network element is configured to send response information of the second request information to the second network element.

20. The access network device according to claim 19, wherein
the second request information further comprises the radio link control configuration information and the medium access control configuration information; or
the second request information further comprises the medium access control configuration information.

21. The access network device according to any one of claims 1 to 20, wherein the access network device further comprises the third network element communicatively connected to the first network element and the second network element, and the third network element comprises the non-real-time part of the physical layer function and the real-time part of the physical layer function;
the first network element is configured to receive a measurement report MR from a terminal device, and send third request information to the third network element based on the MR, wherein the third request information is used to request to allocate a resource for the terminal device to access the third network element;
the third network element is configured to send response information of the third request information to the first network element; and
the first network element is configured to send a handover command to the terminal device based on the response information of the third request information, wherein the handover command indicates the terminal device to be handed over from the second network element to the third network element.

22. The access network device according to claim 21, wherein
the first network element is further configured to send third indication information to the second network element, wherein the third indication information indicates to release a resource occupied by the terminal device; and
the second network element is configured to release, based on the third indication information, the resource occupied by the terminal device.

23. A communication system, wherein the communication system comprises the access network device according to any one of claims 1 to 22.

24. A communication method, wherein the method is applied to an access network device and comprises:
receiving first information from a terminal device via a second network element of the access network device, wherein the second network element comprises a non-real-time part of a physical layer function and a real-time part of the physical layer function;
sending second information to a first network element of the access network device via the second network element, wherein the second information is information obtained by the second network element processing the first information, and the first network element comprises a radio resource control function, a packet data convergence protocol function, a non-real-time part of a radio link control function, and a non-real-time part of a medium access control function; and
sending third information to a core network device via the first network element, wherein the third information is information obtained by the first network element processing the second information.

25. The method according to claim 24, wherein the method further comprises:
sending first request information to the second network element via the first network element, wherein the first request information is used to request to configure a first interface, the first request information comprises physical layer configuration information, and the first interface is an interface between the first network element and the second network element; and
sending response information of the first request information to the first network element via the second network element.

26. The method according to claim 24 or 25, wherein the method further comprises:
sending second request information to a third network element of the access network device via the second network element, wherein the third network element comprises the non-real-time part of the physical layer function and the real-time part of the physical layer function, the second request information is used to request to configure a second interface, the second request information comprises the physical layer configuration information, and the second interface is an interface between the second network element and the third network element; and
sending response information of the second request information to the second network element via the third network element.

27. The method according to any one of claims 24 to 26, wherein the method further comprises:
receiving a measurement report MR from the terminal device via the first network element;
sending third request information to the third network element of the access network device based on the MR via the first network element, wherein the third network element comprises the non-real-time part of the physical layer function and the real-time part of the physical layer function, and the third request information is used to request to allocate a resource for the terminal device to access the second network element;
sending response information of the third request information to the first network element via the third network element; and
sending a handover command to the terminal device based on the response information of the third request information via the first network element, wherein the handover command indicates the terminal device to be handed over from the second network element to the third network element.

28. The method according to claim 27, wherein the method further comprises:
sending third indication information to the second network element via the first network element, wherein the third indication information indicates to release a resource occupied by the terminal device; and
releasing, based on the third indication information via the second network element, the resource occupied by the terminal device.

29. A computer-readable storage medium, wherein the computer-readable storage medium stores computer instructions or a program, and when the computer instructions or the program is run on a computer, the communication method according to any one of claims 24 to 28 is performed.

30. A computer program product, wherein the computer program product comprises computer instructions, and when a part or all of the computer instructions are run on a computer, the communication method according to any one of claims 24 to 28 is performed.
